# EUROPEAN PATENT SPECIFICATION

(11) **EP 0 323 890 B1**
(45) Date of publication and mention of the grant of the patent: **22.09.1993**
(21) Application number: 89300033.1
(22) Date of filing: 04.01.1989
(51) Int. Cl.: G11B 27/30, G11B 20/12, G11B 27/10, G06F 3/06

(54) **Data storage method**
Datenspeicherverfahren
Méthode de stockage de données

(30) Priority: 08.01.1988 GB 8800353
(43) Date of publication of application: 12.07.1989
(73) Proprietor: Hewlett-Packard Limited, Wokingham, Berkshire RG11 3LL (GB); SONY CORPORATION, Tokyo 141 (JP)
(72) Inventor: Thompson, Bruce Allen, Fort Collins Colorado 80634 (US); Ozaki, Shinya, Shinagawa-ku Tokyo (JP); Yamada, Masaki, Shinagawa-ku Tokyo (JP)
(74) Representative: Squibbs, Robert Francis

(56) References cited:
- EP-A- 0 258 104
- EP-A- 0 263 014
- EP-A- 0 272 130
- Proceedings of the international congress on transportation electronics vol. P-183, October 1986, Warrendale, PA, USA pages 321 - 331; M.Finer: "Sony digital audio tape"

## Description

The present invention relates to a data storage method for storing user data and segmentation information received from a host onto tape and also to the retrieval of data stored according to this method.

Tape storage apparatus is known which is arranged to receive from a host a stream of user-data words organised into records, the apparatus being further arranged to write the data words to tape together with first segmentation indications indicative of the division of the data words into records. Thus, in one known example, the data words are written in groupings that correspond to the received records, the groupings being separated by inter-block gaps that constitute the aforesaid first segmentation indications.

It is also known to write to tape second segmentation indications (file marks) that represent a division of the records into collections. These segmentation indications are written to tape in response to specific signals received by the storage apparatus from the host. In the case of the example mentioned above, the second segmentation indications may be constituted by fixed frequency bursts.

Generally, file marks are used to indicate some quite specific and close association between records. This segmentation of the records is thus at a low level and in many cases does not reflect some important higher-level division of the records. In particular, the association that may exist between sets of records and a particular end user cannot normally be represented except in terms of the contents of the records themselves.

European Patent specification EP-A-0 272 130 (Sony Corporation) which was published after the priority date of the present application but has an earlier priority, discloses a DAT-based data recorder (a general description of a DAT recorder may be found, for example, in Proceedings of the International Congress on Transportation Electronics, vol. P-183, October 1986, pages 321-331). The data recorder described in EP-A- 0 272 130 operates such that during each data saving operation, one or more files are written to tape with each file being split up into blocks of 512 bytes. The sequence number of the saving operation is referred to as the "save set" number whilst the sequence number of a file within a save set operation is termed the "file number". Data is written to tape in tracks each of which comprises a main data area and two sub-code areas. The user data is recorded in the main data area whilst the sub-code areas are used to store various control information and counts, including the "save set" and "file number" counts. Sub-division of a file into records is not discussed in EP-A-0 272 130.

According to the present invention, there is provided a data storage method for storing user data and segmentation information on tape, the method including the steps of:
- receiving a stream of user-data words organised into a plurality of records and writing the user-data words to tape together with first segmentation indications indicative of the division of the user-data words into records,
- receiving segmentation signals representative of a segmentation of the plurality of records into collections of records and writing second segmentation indications to tape that are indicative of the segmentation represented by said signals, and
- receiving further segmentation signals representative of a further segmentation of said records into sets of records distinct from said collections and writing third segmentation indications to tape that are indicative of the further segmentation represented by said further signals,
said first, second and third segmentation indications being written in such a manner as to be distinguishable front one another and said user data words; and said user data words being written to tape in blocks independently of the record structure of the data words, each block having an associated index containing said first, second and third segmentation indications relevant to the segmentation of data words in that block.

The principle of arranging user data words in blocks and providing separate indexes for segmentation of the data forms the subject of European Patent specification EP-A-0 324 542 (Hewlett Packard Company).

Using the third segmentations indications, it is possible to identify, for example, sets of records belonging to different end users without having to read the data words themselves.

Preferably, the second and third segmentation indications can be independently written to indicate segmentation after the same record whereby said third indications can be used to indicate sets independently of said second indications used to indicate collections.

The use of third segmentation indications is particularly advantageous where they are used to facilitate data retrieval from tape; for example, where the third segmentation indications separate off sets of records belonging to different end users, the ability to carry out a search for the next such indication makes it possible to skip to the records of the next end user without the host having to examine all intervening records or collections of records.

In a preferred implementation, a helical scan recording technique is employed to write a plurality of oblique tracks each including a main data area and a sub data area. The main data area is used to store the user data words in fixed-sized blocks independently of their underlying record structure, each block also containing an index that holds the first, second and third segmentation indications.

Advantageously, in the aforesaid preferred implementation, a count is accumulated that is indicative of the number of third segmentation indications written to the tape in total. Values of this count are then recorded in the sub data areas of the tracks and are used during data retrieval to facilitate searching of the tape for particular third segmentation indications.

### DESCRIPTION OF THE DRAWINGS

A data storage method and apparatus embodying the invention and for storing computer data and logical segmentation marks on tape, will now be particularly described, by way of non-limiting example, with reference to the accompanying diagrammatic drawings, in which:

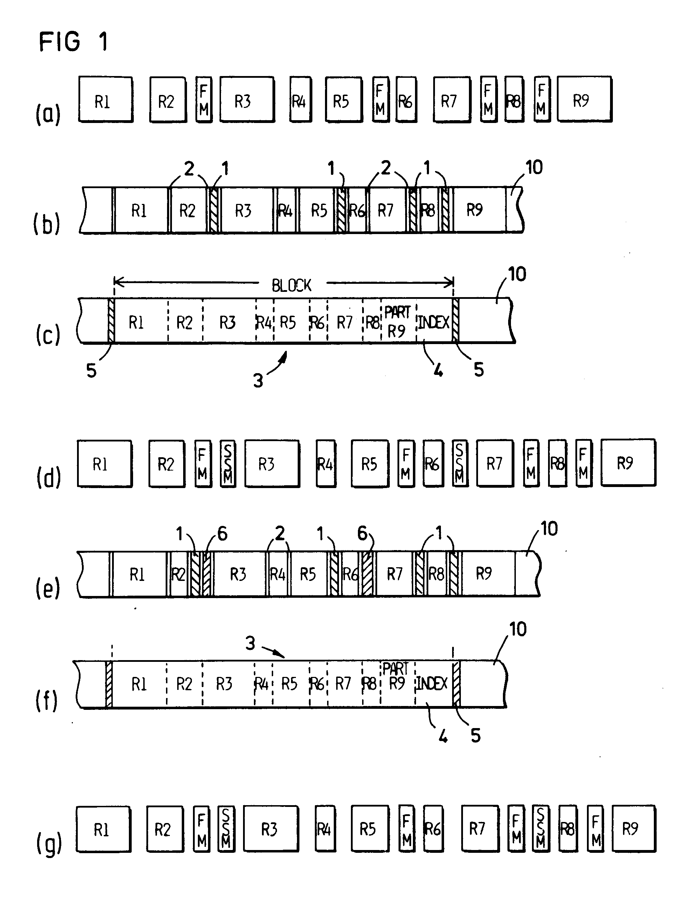

Figure 1 is a multi-part diagram illustrating the general principle of the present invention, in which:
   (a), (d) and (g) are diagrams representing sequences of data records and logical segmentation marks sent by a user (host) to the data storage apparatus,
   (b) and (c) - are diagrams illustrating two different arrangements for storing the sequence of Figure 1 (a) on tape,
   (e) and (f) - are diagrams illustrating two different arrangements for storing the sequence of Figure 1(d) on tape;
Figure 2 is a diagram illustrating the main physical components of a tape deck which employs helical scanning and which forms part of the data storage apparatus embodying the invention;
Figure 3 is a diagrammatic representation of two data tracks recorded on tape using helical scanning;
Figure 4 is a diagrammatic representation of the format of a main data area of a data track recorded in accordance with the present data storage method;
Figure 5 is a diagrammatic representation of the format of a sub data area of a data track recorded in accordance with the present data storage method;
Figure 6 is a diagram showing for the present method, both the arrangement of data frames in groups within a data area of a tape and details of an index recorded within each group of frames;
Figure 7 is an example illustrating how a sequence of data records and logical segmentation marks are stored to tape according to the present data storage method;
Figure 8 is a block diagram of the main components of the data storage apparatus embodying the invention;
Figure 9 is more detailed functional block diagram of a group processor of the data storage apparatus; and
Figure 10 is a flow chart of an algorithm implemented by the apparatus in searching for a next logical segmentation mark along a tape.

### DESCRIPTION OF THE PREFERRED EMBODIMENT

The description that follows has, for clarity, been divided into three sections, namely a first section explaining in general terms the segmentation concept implemented by the present invention, a second section describing the tape format employed by a helical-scan implementation of the logical segmentation concept explained in the first section, and a third section describing data storage apparatus for putting into practice the format disclosed in the section.

### 1) Logical Segmentation

The supply of the data from a user (host computer) to a tape storage apparatus will generally be accompanied by user segmentation of the data, whether this segmentation be the physical segmentation of the data into discrete packages (records) passed to the storage apparatus, or some higher-level conceptual organisation of the records which is expressed to the storage apparatus by the host in terms of specific signals. This user-segmentation of data will have some particular significance to the host (though this significance will generally be unknown to the tape storage device); it is therefore appropriate to consider user segmentation as a logical segmentation even though its presence may be expressed to the storage apparatus through the physical segmentation of the incoming data.

The user segmentation may have a hierarchical structure with the first level of the hierarchy being the segmentation constituted by the physical segmentation of data into records for passing to the storage apparatus. A second level of the segmentation hierarchy would be a segmentation dividing the records into collections of whole records; this segmentation would generally be expressed to the storage apparatus by specific signals.

A tape storage apparatus must be capable of recording and recovering user segmentation information; furthermore, the apparatus will usually be required to effect searching on the basis of such segmentation regardless of how the apparatus itself is organised to store the data.

Figure 1(a) illustrates a sequence of user data and special segmentation signals that an existing type of host might supply to a tape storage apparatus. In this example, data is supplied in variable-length records R1 to R9; the logical significance of this physical segmentation is known to the host but not to the storage apparatus. In addition to the physical segmentation, user segmentation information is supplied in the form of special "file mark" signals FM. The file marks FM are provided to the storage apparatus between data records; again, the significance of this segmentation is unknown to the storage apparatus. The physical segmentation into records provides a first level of segmentation while the file marks provide a second level forming a hierarchy with the first level.

Figure 1(b) shows one possible physical organisation for storing the user data and user segmentation information of Figure 1(a) on a tape 10, this organisation being in accordance with a known data storage method. The mapping between Figure 1(a) and 1(b) is straightforward - file marks FM are recorded as fixed-frequency bursts 1 but are otherwise treated as data records, with the records R1-R9 and the file marks FM being separated from each other by inter-block gaps 2 where no signal is recorded. The inter-block gaps 2 effectively serve as first-level segmentation marks enabling the segmentation of the stored data into the user-understood logical unit of a record; the file marks FM (fixed frequency bursts 1) form second-level segmentation marks dividing the records into logical collections of records.

Figure 1(c) shows a second possible organisation for storing the user data and user segmentation information of Figure 1(a) on tape 10. In this case, the user data is organised into fixed-size blocks 3 each including an index 4; blocks 3 may be separated off by fixed frequency bursts 5. The division of data into blocks is purely for the convenience of the storage apparatus concerned and should be transparent to the host. The user data within a block is not physically segmented in any way and each record simply continues straight on from the end of the preceding one; all information regarding segmentation of the data in a block both into records and into the collection of records delimited by file marks is contained in the index of the block. In the present example, records R1 to R8 and the first part of R9 are held in the illustrated block 3. The index 4 can record the segmentation data in any one of a number of ways, such as in terms of the byte count from the beginning of the block at which a record boundary or file mark occurs. An alternative approach would be to record the length of each record (whole or part) in sequence and the presence of any file marks at the end of a record. Regardless of the exact implementation adopted, any index entry providing an indication of the location of a record boundary effectively constitutes a record mark; such marks define the first level of data segmentation. The second level is, of course, defined by the file mark entries.

The length of the index 4 will generally vary according to the number of segmentation marks present; however, by recording the index length in a predetermined location in the index with respect to the block ends, the boundary between the index and the last byte can be identified.

It may be noted that with a hierarchical segmentation of data as in the example of Figure 1(a), there is a degree of redundancy in the storage arrangements described with respect to Figure 1(b) and 1(c) as there is no need to indicate the end of a record with a record boundary mark - the inter-block gap 2 of Figure 1(b) and the record-mark index entry of Figure 1(c) - where a file mark also occurs between one record and the next. However, this redundancy is generally of significant benefit in reducing the complexity of implementation.

The present invention concerns the provision of a further group of segmentation marks which will hereinafter be referred to as "save set marks". Figure 1(d) illustrates a sequence of user data and segmentation marks similar to that of Figure 1(a) but including two save set marks SSM as well as the records R1 to R9 and file marks FM. In Figure 1(d), the save set marks SSM constitute a further second-level to the segmentation hierarchy that is independent of the second level provided by the file marks FM. In other words, the save set marks SSM do not serve to group together collections of records defined by the file marks FM, but serve to define different collections or sets of records. Thus, a save set mark may occur independently of a file mark and vice versa. The practical implication of this is that any storage organisation used must be capable of storing both a file mark and a save set mark at the boundary between two records since neither mark implies the other.

Figure 1(e) shows the arrangement on tape of the Figure 1(d) sequence for a storage organisation similar to that of Figure 1(c) but expanded to take account of the save set marks SSM, the latter being recorded as fixed frequency bursts 6 of different frequency to the bursts 1 used to indicate file marks. By using a unique frequency for the bursts 6, it becomes possible to record independently the presence of a save set mark and a file mark after the same record.

Figure 1(f) shows the arrangement on tape of the Figure 1(d) sequence for a storage organisation similar to that of Figure 1(c) but expanded to take account of the save set marks SSM. As might be expected, for this organisation where segmentation information is stored in an index 4, there is virtually no difference in the arrangement of the user data between Figures 1(c) and 1(f); in fact for a constant block size, there is one minor difference, this being that the amount of the record R9 recorded in the case of Figure 1(f) is slightly less than in Figure 1(c) since the index is longer in the former case as the result of the inclusion of entries for the save set marks. These save set mark entries indicate the location of the marks as referred to the user data stored in block 3. In addition, there is, of course, some type indication enabling a save-set mark entry to be distinguished from a file mark entry.

Figure 1(g) shows a sequence of records R1 to R9 and segmentation marks FM, SSM in which save set marks SSM occur in such a relationship to the file marks FM as to effectively constitute a third level to the segmentation hierarchy, that is, they delimit groups of collections of records as opposed to the further second level that the save set marks provided in the case of Figure 1(d). Were save set marks only to be used in this sense, then the storage organisation used to record the segmentation marks need only provide for the storage of either file marks or save set marks after a record but not both, since the presence of a save set mark could be taken as also indicating the presence of a file mark. However, to limit a storage organisation in this manner is considered unduly restricting and it is preferred to use a storage organisation in which the save-set marks are independent of the file marks; it is then up to the host whether it uses save set marks for a further second-level of segmentation or as a third-level segmentation.

Having considered in general terms the segmentation concept represented by save set marks, a specific example of a suitable storage organisation (tape format) will now be described together with a storage method and apparatus for implementing this organisation. The storage organisation is similar to that illustrated in Figure (f) and is suitable for storing both data records with suitable record boundary indications, and file marks and save set marks which are independent of each other but only occur at record boundaries. The storage method and apparatus assumes that the host is arranged to pass both distinct data records and also specific signals to indicate file mark and save set mark segmentation. The actual read/write technology employed utilises helical scanning to read/write data in oblique tracks but this in no way affects the general principles already discussed.

### 2) Tape Format for Helical-Scan Implementation

The storage method and apparatus described hereinafter utilises a helical scan technique for storing data in a format similar to that used for the storage of PCM audio data according to the DAT Conference Standard (June 1987, Electronic Industries Association of Japan, Tokyo, Japan). The present method and apparatus is, however, adapted for storing computer data rather than digitised audio information.

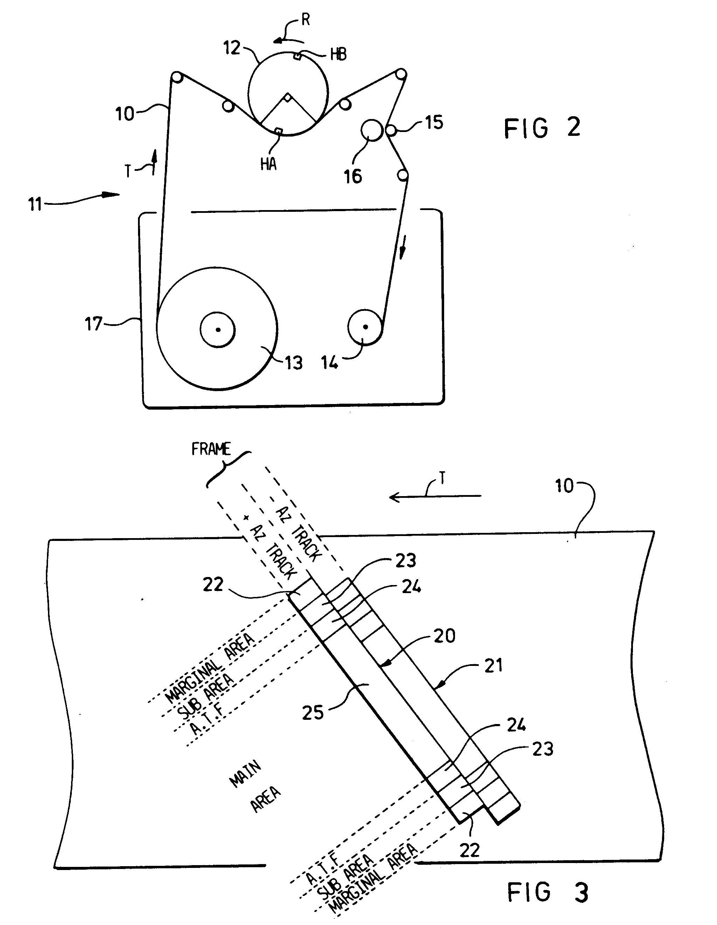

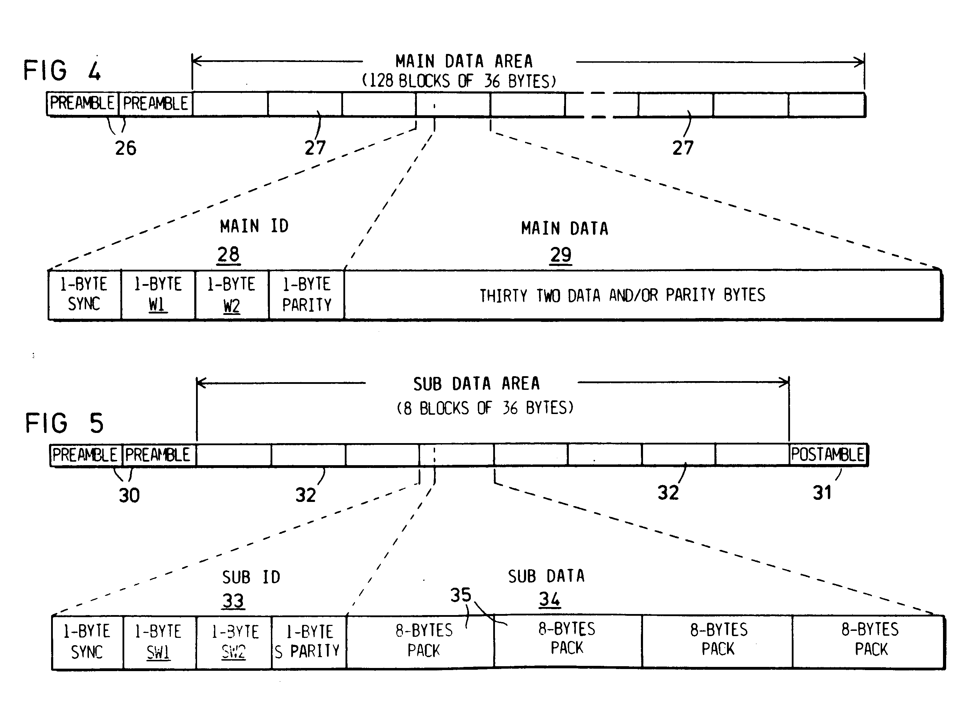

Figure 2 shows the basic layout of a helical-scan tape deck 11 in which tape 10 from a tape cartridge 17 passes at a predetermined angle across a rotary head drum 12 with a wrap angle of 90°. In operation,the tape 10 is moved in the direction indicated by arrow T from a supply reel 13 to a take-up reel 14 by rotation of a capstan 15 against which the tape is pressed by a pinch roller 16; at the same time, the head drum is rotated in the sense indicated by arrow R. The head drum 12 houses two read/write heads HA, HB angularly spaced by 180°. In known manner, these heads HA, HB are arranged to write overlapping oblique tracks 20, 21 respectively across the tape 10 as shown in Figure 3. The track written by head HA has a positive azimuth while that written by head HB has a negative azimuth. Each pair of positive and negative azimuth tracks, 20, 21 constitutes a frame.

The basic format of each track as arranged to be written by the present apparatus is illustrated in Figure 3. Each track comprises two marginal areas 22, two sub areas 23, two ATF (Automatic Track Following) areas 24, and a main area 25. The ATF areas 24 provide signals enabling the heads HA, HB to accurately follow the tracks in known manner. The main area 25 is used primarily to store the data provided to the apparatus (user data) although certain auxiliary information is also stored in this area; the sub areas 23 are primarily used to store further auxiliary information. The items of auxiliary information stored in the main and sub areas are known as sub codes and relate for example, to the logical organisation of the user data, its mapping onto the tape, certain recording parameters (such as format identity , tape parameters etc), and tape usage history.

A more detailed description of the main area 25 and sub areas 23 will now be given including details as to block size that are compatible with the aforementioned DAT Conference Standard.

The data format of the main area 25 of a track is illustrated in Figure 4. The main area is composed of 130 blocks each thirty six bytes long. The first two blocks 26 are pre-ambles which contain timing data patterns to facilitate timing synchronisation on playback. The remaining 128 blocks 27 make up the 'Main Data Area'. Each block 27 of the Main Data Area comprises a four-byte 'Main ID' region 28 and a thirty-two byte 'Main Data' region 29, the compositions of which are shown in the lower part of Figure 4.

The Main ID region 28 is composed of a sync byte, two information-containing bytes W1, W2 and a parity byte. Byte W2 is used for storing information relating to the block as a whole (type and address) while byte W1 is used for storing sub codes.

The Main Data region 29 of each block 27 is composed of thirty two bytes generally constituted by user-data and/or user-data parity. However, it is also possible to store sub codes in the Main Data region if desired.

The data format of each sub area 23 of a track is illustrated in Figure 5. The sub area is composed of eleven blocks each thirty-six bytes long. The first two blocks 30 are pre-ambles while the last block 31 is a post-amble. The remaining eight blocks 32 make up the "Sub Data Area". Each block 32 comprises a four-byte 'Sub ID' region 33 and a thirty-two byte 'Sub Data' region 34, the compositions of which are shown in the lower part of Figure 5.

The Sub ID region 33 is composed of a sync byte, two information-containing bytes SW1, SW2 and a parity byte. Byte SW2 is used for storing information relating to the block as a whole (type and address) and the arrangement of the Sub Data region 34. Byte SW1 is used for storing sub codes.

The Sub Data region 34 of each block 32 is composed of thirty two bytes arranged into four eight-byte "packs" 35. These packs 35 are used for storing sub codes with the types of sub code stored being indicated by a pack-type label that occupies the first half byte of each pack. The fourth pack 35 of every even block is set to zero while the fourth pack of every odd block is used to store parity check data for the first three packs both of that block and of the preceding block.

In summary, user data is stored in the Main Data regions 29 of the Main Data Area blocks 27 of each track while sub codes can be stored both in the Sub ID and Sub Data regions 33, 34 of Sub Data Area blocks 32 and in the Main ID and Main Data regions 28, 29 of Main Data Area blocks 27.

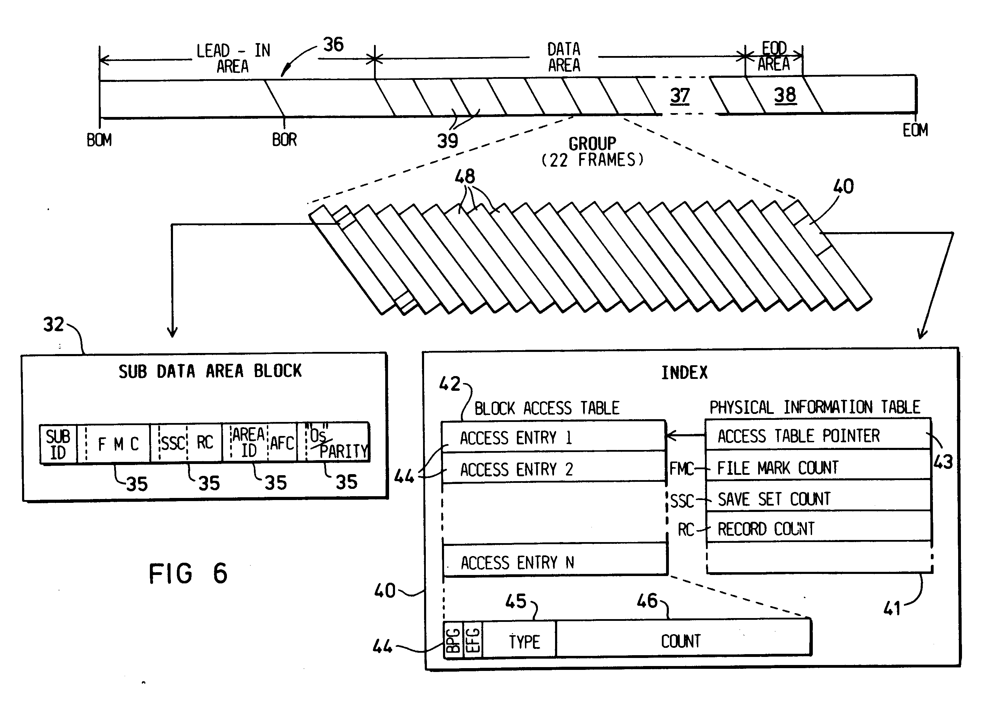

For the purposes of the present description, the sub codes of interest are an Area ID sub code used to identify the tape area to which particular tracks belong, and a number of sub codes used for storing counts of records, file marks and save set marks. The area ID sub code is a four-bit code stored in two locations. Firstly, it is stored in the third pack 35 of the Sub Data region 34 of every block in the Sub Data Areas of a track. Secondly, it is stored in byte SW1 of the Sub ID region 33 of every even Sub Data Area block 32 in a track, starting with the first block. The tape areas identified by this sub code will be described later on with reference to Figure 6.

The sub codes used to store record, file mark, and save-set mark counts are stored in the first two packs 35 of the Sub Data region 34 of every block in the Sub Data Areas of each track within the Data Area of the tape (see later with reference to Figure 6). These counts are cumulative counts taken from the start of user data on the tape. The record count may be a count solely of data records written to that point or may be a count of (data records + file marks + save set marks). These counts are used for fast searching the tape and to facilitate this process are constant over a set of frames known as a group (to be more fully explained below), the counts recorded in the tracks of a group of frames being the counts applicable as of the end of the group.

The general organization of frames along the tape as implemented by the present storage method and apparatus will be considered next. Thus, referring to Figure 6, the tape can be seen to be organised into three main areas, namely a lead-in area 36, a data area 37 and an end-of-data (EOD) area 38. The ends of the tape are referenced BOM (beginning of media) and EOM (end of media). User data is recorded in the frames of data area 37. The lead-in area 36 includes an area between a beginning-of-recording BOR mark and the data area 37 where system information is stored. The Area ID sub code enables the system area, data area 37 and EOD area 38 to be distinguished from one another.

The frames 48 of the data area are arranged in groups 39 each of a fixed number of frames (for example, twenty two); optionally, these groups are separated from each other by one or more amble frames of predetermined content. In terms of organisation of user data records, these groups 39 correspond to the blocks 3 described with reference to Figure 1(c) and (f). Thus, the placement of user data into such groups 39 has no relation to the logical segmentation of the user data and information relating to this segmentation (record marks, file marks and save set marks) is stored in an index 40 that terminates the user-data in a group (the index actually occupies user data space within the group). Note that although the index is shown in Figure 6 as occupying the final portion of the last frame of the group, this is only correct in relation to the arrangement of data prior to a byte-interleaving operation that is normally effected before data is recorded on tape; however, for present purposes, the interleaving operation can be disregarded.

The form of the index 40 is shown in Figure 6 and, as can be seen, the index comprises two main data structures, namely a physical information table 41 and a block access table 42. The physical information table 41 is stored in a fixed location at the end of the group 39 and is the same size independent of the contents of the group. In contrast, the block access table 42 varies in size depending on the contents of the group 39 and extends from the physical information table 41 backwards into the remainder of the user data area of the frames of the group. Entries are made in the block access table from the boundary with real user data forwards to the physical information table; the location of the first entry in the block access table 42 relative to the physical information 41 is stored in an access table pointer 43 held in the physical information table.

The physical information table 41 also contains various counts, the ones of relevance to the present description being a file mark count FMC (the number of file marks written since BOR including any contained in the current group), a save set count SSC (the number of save set marks written since BOR including any contained in the current group), and a record count RC (either the number of data records, or the number of data records plus file marks, plus save set marks, written since BOR and including any contained in the current group).

The block access table 42 describes by way of a series of access entries 44, the contents of a group 39 and, in particular, the logical segmentation of the user data held in the group (that is, it holds entries indicative of each record boundary, file mark and save set mark in the group). The access entries proceed in order of the contents of the group. The composition of an access entry 44 is illustrated below the block access table 42 in Figure 6. Each entry includes two flags BPG and EFG, a type field 45 and a count field 46.

The types of access entries are as follows. For each data record having a full or partial appearance in the group, there is a corresponding access entry, of type 'TL', indicating in the count field the length of the relevant data portion (be it a full or part record); the flags are not relevant in this type of entry. For each data record having a full or partial appearance in the group, there is also a corresponding access entry of type 'REC'; if the record terminates in the group, then its length is given in the count field (which is otherwise set to zero) and if the record is only partial,then one or both flags BPG, EFG are set to one depending on whether the beginning of the record is in a previous group (flag BPG) and/or its end is in a following group (flag EFG). For each file mark there is a corresponding access entry, of type 'FM', with its count field set to zero; the access entry follows the entry of type 'REC' relating to the record after which the file mark is located. Each save set mark is indicated in the same manner as a file mark except that the relevant access entry is of type 'SSM'.

A record that has its beginning in a previous group and ends in the current group will thus be recorded by a first access entry, of type TL, giving the in-group partial length of the record, and a second entry, of the type REC, giving the full record length and with the flat BPG set to one. If the record is followed by a file mark and save set mark, then two access entries of type FM and SSM respectively, would appear after the second access entry.

Also shown in Figure 6 are the contents of a sub data area block 32 of a track within a data-area group 39. As previously noted, the first pack 35 contains a file mark count FMC, the second pack 35 contains a save set count SSC and record count RC, and the third pack 35 contains the Area ID and an absolute frame count AFC. For all the tracks in a group, the counts FMC, SSC and RC held in the sub data area blocks are the same as those held in the physical information table 41 of the group index 40.

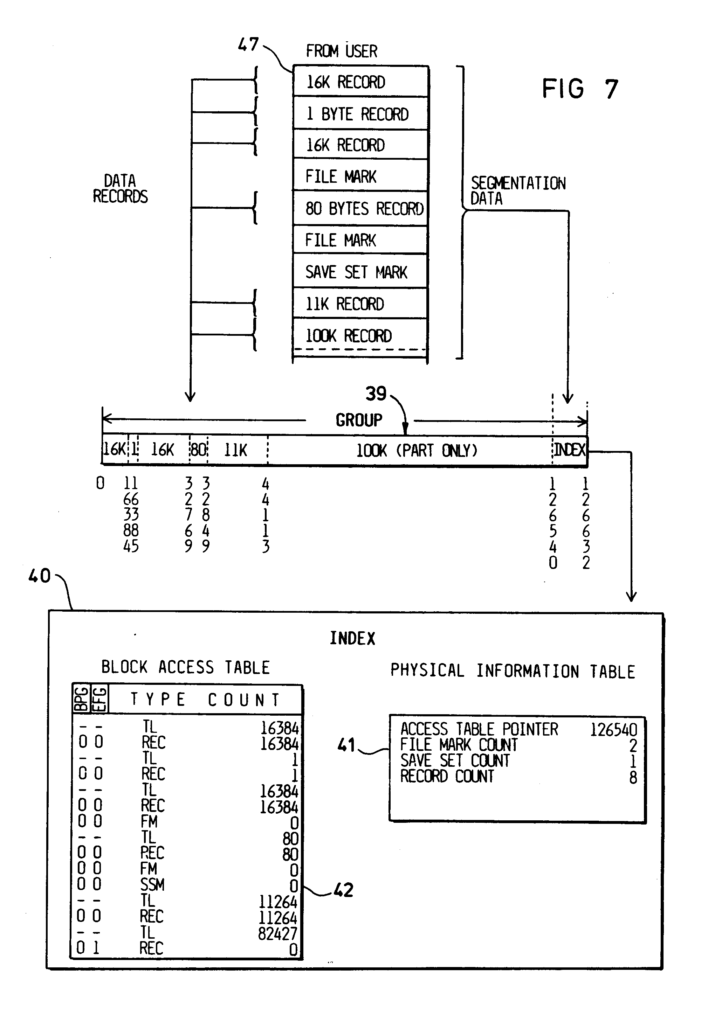

Figure 7 shows an example of the indexing scheme for the illustrated sequence 47 of user-supplied data records, file marks and save set marks. The group is assumed to have an overall capacity of 126632 bytes (including index). This is sufficient to store the first five data records (16K bytes, 1 byte, 16K bytes, 80 bytes, 11 k bytes) of the sequence 47 in their entirety and 82 427 bytes of the sixth record (a 100 k byte record). The user data from the first six records occupies bytes "0" to "126539" of the group while segmentation data (concerning the record boundaries as well as the two file marks and one save set mark in the sequence 47) which is contained in the group index 40, occupies bytes "126540" to "126631". Note that the numbers written vertically below the depiction of group 39 in Figure 7 specify the first byte after the vertical dotted lines above the numbers.

The lower part of Figure 7 shows the contents of the index 40 for the illustrated group. The access table pointer of the physical information table 41 has a value "126540" corresponding to the first byte of the index, this also being the start of the first access entry of the block access table. The file mark count, save set count and record count of the physical information table 41 hold values of two, one and eight respectively, the record count being based on the total of data records, file marks and save set marks. The entries in the block access table 42 are largely self explanatory. It is worth noting, however, that in respect of the final, partial record, there are two entries, namely a first entry of type "TL" showing the amount of the record present in the group, and a second entry, of type "REC" that shows that the end of the record is in a following group, the count field of this entry being zero.

### 3) Implementing Apparatus

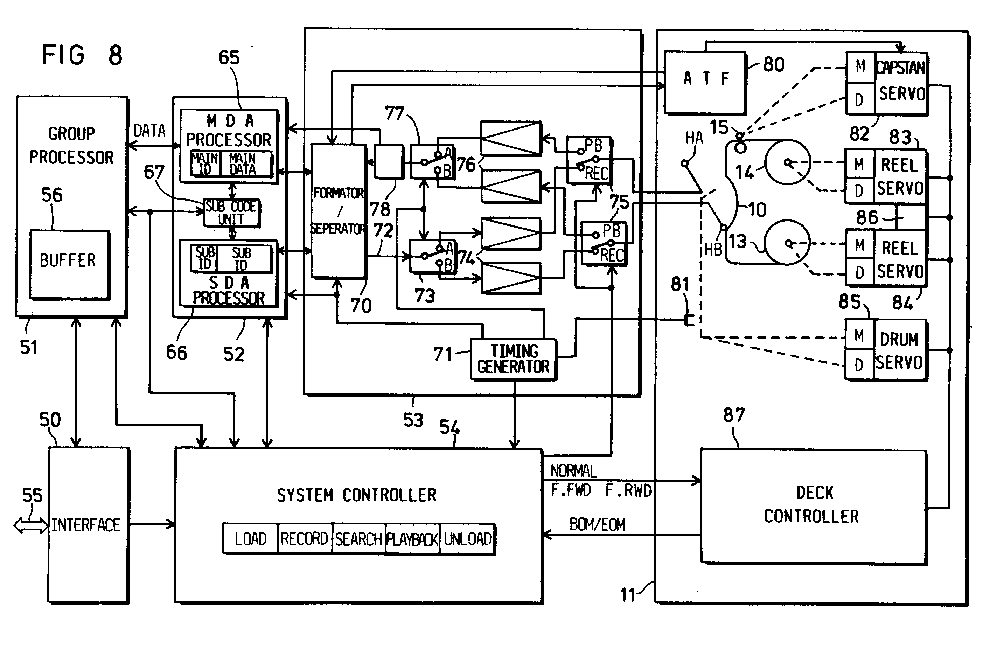

Figure 8 is a block diagram of the data storage apparatus for recording user data and segmentation marks in accordance with the above-described tape format. The apparatus includes the tape deck 11 already described in part with reference to Figure 2. In addition to the tape deck, the apparatus includes an interface unit 50 for interfacing the apparatus with a host computer (not shown) via a bus 55; a group processor 51 and a frame data processor 52 for processing user-record data and segmentation data into and out of Main Data Area and Sub Data Area blocks 27 and 32; a signal organiser 53 for composing/decomposing the signals for writing/reading a track and for appropriately switching the two heads HA, HB; and a system controller 54 for controlling the operation of the apparatus in response to commands received from a computer via the interface unit 50. Each of the main component units of the apparatus will be further described below.

The data storage apparatus is arranged to respond to commands from a computer to load/unload a tape, to store a data record and file and save set segmentation marks, to search for selected segmentation marks, and to read back the next record.

The interface unit 50 is arranged to receive the commands from the computer and to manage the transfer of data records and file and save-set segmentation marks between the apparatus and computer. Upon receiving a command from the computer, the unit 50 passes it on to the system controller 54 which, in due course, will send a response back to the computer via the unit 50 indicating compliance or otherwise with the original command. Once the apparatus has been set up by the system controller 54 in response to a command from the computer to store or read data, then the interface unit 50 will also control the passage of records and segmentation marks between the computer and group processor 51.

During data storage the group processor 51 is arranged to organise the user-data that is provided to it in the form of data records, into data packages each corresponding to a group's worth of data. The processor 51 is also arranged to construct the index for each group and the sub codes that contain segmentation mark counts. During reading, the group processor effects a reverse process enabling data records and segmentation marks to be recovered from a group read from tape.

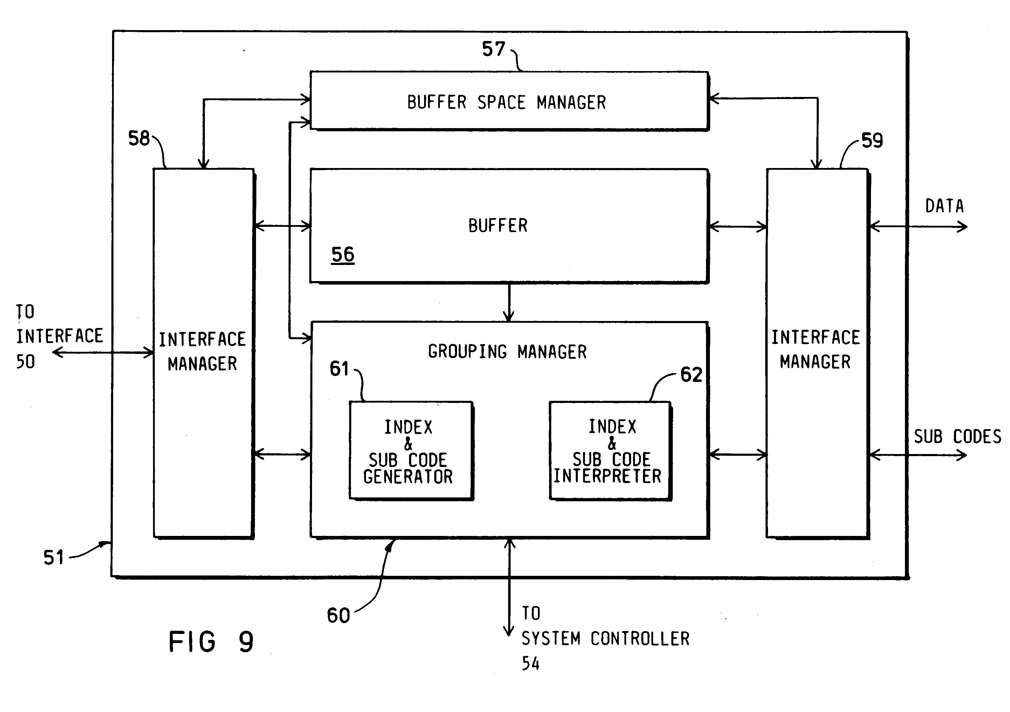

The form of the group processor 51 is shown in Figure 9. At the heart of the group processor 51 is a buffer 56 which is arranged to hold several (for example, three) group's worth of data. The allocation of buffer space to incoming and outgoing data is controlled by a buffer space manager 57. The processor 51 communicates with the interface 50 via a first interface manager 58 and with the frame data processor 52 via a second interface manager 59. Overall control of the grouping process is effected by a grouping manager 60 which also generates the group indexes and segmentation-count sub codes during recording (functional block 61) and interprets these indexes and sub codes during reading (functional block 62). The grouping manager 60 is arranged to exchange coordination signals with the system controller 54.

During recording when the host is ready to pass a data record, the interface 50 asks the buffer space manager 57 (via the interface manager 58) whether the processor 51 is ready to receive the record. The buffer space manager 57 may initially send a 'wait' reply but, in due course, enables the transfer of the data record from the host to the buffer 56. The record will be transferred to a buffer location that corresponds to the eventual positioning of the record data within the group of which it is to form a part. Information on the size of the record is passed to the grouping manager 60. When the host sends a file mark or save set mark indication this is also routed to the grouping manager 60. The grouping manager keeps track of the file mark, save set mark and record counts from BOR and users this information in the construction of the index and segmentation-count sub codes of a group. The index is constructed in a location in the buffer appropriate to its position at the end of a group. Once a group (including its index and sub codes) has been assembled, it is transferred to the frame data processor 52 for organisation into the blocks making up the main data areas and sub data areas of twenty two successive frames. Conceptually there is no need for the frame data processor 52 to be aware of the grouping of frames as the group processor 51 could simply pass it a frame's worth of user data at a time together with the appropriate sub codes. However, in order to speed the transfer of data between the processor 51 and 52, it is advantageous for the frame data processor 52 to be managed in terms of groups for receiving data from the processor 51 - in other words, during recording, the processor 52 is told by the group processor 51 when a group is ready for processing after which the processor 52 accesses the frames of the group autonomously from the buffer 56 via the interface manager 59.

As previously mentioned, it may be desirable to insert one or more amble frames between groups of frames recorded on the tape. This can be done by arranging for the frame data processor 52 to generate such amble frames either upon instruction from the group processor 51 or automatically at the end of a group if the processor 52 is aware of group structure.

By sizing the buffer 56 such that it can hold three group's worth of data, the general operation of the processor 51 can be kept as straight forward as possible with one group being read in, one group being processed, and one group being output.

When data is being read from tape, the group processor 51 is arranged to receive user-data and sub-codes on a frame-by-frame basis from the frame data processor 52, the data being written into the buffer 56 in such a manner as to build up a group. The group processor 51 can then access the group index to recover information on the logical organisation (record structure, file marks, save set marks,) of the user-data in the group. Using this information the group processor can pass a requested record or segmentation mark to the host via the interface unit 50.

To facilitate the assembly of frame data back into a group's worth of data, each frame can be tagged with an in-group sequence number when the frame is written to tape. This in-group number can be provided as a sub code that, for example, is included at the head of the main data region of the first block in the Main Data Area of each track of a frame. The subcode is used on playback to determine where the related frame data is placed in the buffer 56 when passed to the group processor 51.

The frame data processor 52 functionally comprises a Main-Data-Area (MDA) processor 65, a Sub-Data-Area (SDA) processor 66, and a sub code unit 67 (in practice, these functional elements may be constituted by a single microprocessor running appropriate processes).

The sub code unit 67 is arranged to provide subcodes to the processors 65 and 66 as required during recording and to receive and distribute sub codes from the processors 65, 66 during playback. Dependent on their information contents, sub codes may be generated/required by the group processor 51 or the system controller 54; the segmentation count sub codes are, for example, determined/used by the group processor 51 while the Area ID sub codes is determined used by the controller 54. In the case of non-varying sub codes such as certain recording parameters, the sub codes may be permanently stored in the unit 67. Furthermore, any frame-dependent sub codes may conveniently be generated by the sub code unit 67 itself.

The MDA processor 65 is arranged to process a frame's worth of user data at a time together with any relevant sub codes. Thus during recording, the processor 65 receives a frame's worth of user-data from the group processor 51 together with sub codes from the unit 67. On receiving the user-data the processor 65 interleaves the data, and calculates error correcting codes, before assembling the resultant data and sub codes to output the Main-Data-Area blocks for the two tracks making up a frame. In fact before assembling the user data with the sub codes, scrambling (randomising) of the data may be effected to ensure a consistent RF envelope independent of the data contents of a track signal.

During playback, the processor 65 effects a reverse process on the two sets of Main-Data-Area blocks associated with the same frame. Unscrambled, error-corrected and de-interleaved user data is passed to the group processor 51 and sub codes are separated off and distributed by the unit 67 to the processor 51 or system controller 54 as required.

The operation of the SDA processor 66 is similar to the processor 65 except that it operates on the sub codes associated with the sub-data-areas of a track, composing and decomposing these sub codes into and from Sub-Data-Area blocks.

The signal organiser 53 comprises a formatter/separator unit 70 which during recording (data writing) is arranged to assemble Main-Data-Area blocks and Sub-Data-Area blocks provided by the frame data processor 52 together with ATF signals from an ATF circuit 80, to form the signal to be recorded on each successive track. The necessary pre-amble and post-amble patterns are also inserted into the track signals where necessary by the unit 70. Timing signals for coordinating the operation of the unit 70 with rotation of the heads HA, HB are provided by a timing generator 71 fed with the output of a pulse generator 81 responsive to head drum rotation. The track signals output on line 72 from the unit 70 are passed alternately to head HA and head HB via a head switch 73, respective head drive amplifiers 74, and record/playback switches 75 set to their record positions. The head switch 73 is operated by appropriately timed signals from the timing generator 71.

During playback (data reading) the track signals alternately generated by the heads HA and HB are fed via the record/playback switches 75 (now set in their playback positions), respective read amplifiers 76, a second head switch 77, and a clock recovery circuit 78, to the input of the formatter/separator unit 70. The operation of the head switch 77 is controlled in the same manner as that of the head switch 73. The unit 70 now serves to separate off the ATF signals and feed them to the circuit 80, and to pass the Main-Data-Area blocks and Sub-Data-Area blocks to the frame data processor 52. Clock signals are also passed to the processor 52 from the clock recovery circuit 78.

The switches 75 are controlled by the system controller 54.

The tape deck 11 comprises four servos, namely a capstan servo 82 for controlling the rotation of the capstan 15, first and second reel servos 83, 84 for controlling rotation of the reels 14, 15 respectively, and a drum servo 85 for controlling the rotation of the head drum 12. Each servo includes a motor M and a rotation detector D both coupled to the element controlled by the servo. Associated with the reel servos 83, 84 are means 86 for sensing the beginning-of-media (BOM) and end-of-media (EOM); these means 86 may for example be based on motor current sensing, as the motor current of whichever reel is being driven to wind in tape (dependant on the direction of tape travel) will increase significantly upon stalling of the motor at BOM/EOM.

The tape deck 11 further comprises the automatic track following circuit 80 for generating ATF signals for recordal on tape during recording of data. During playback, the ATF circuit 80 is responsive to the ATF track signal read from tape to provide an adjustment signal to the capstan servo 82 such that the heads HA, HB are properly aligned with the tracks recorded on the tape. The tape deck 11 also includes the pulse generator 81 for generating timing pulses synchronised to the rotation of the heads HA, HB .

The operation of the tape deck 11 is controlled by a deck controller 87 which is connected to the servos 82 to 85 and to the BOM/EOM sensing means 86. The controller 87 is operable to cause the servos to advance the tape, (either at normal speed or at high speed) through any required distance. This control is effected either by energising the servos for a time interval appropriate to the tape speed set, or by feedback of tape displacement information from one or more of the rotation detectors D associated with the servos.

The deck controller 87 is itself governed by control signals issued by the system controller 54. The deck controller 87 is arranged to output to the controller 54 signals indicative of BOM and EOM being reached.

The system controller 54 serves both to manage high-level interaction between the computer and storage apparatus and to coordinate the functioning of the other units of the storage apparatus in carrying out the basic operations of Load/Record/Search/Playback/Unload requested by the computer. In this latter respect, the controller 54 serves to coordinate the operation of the deck 11 with the data processing portion of the apparatus.

In controlling the tape deck 11, the system controller can request the deck controller 87 to move the tape at the normal read/write speed (Normal) or to move the tape forwards or backwards at high speed, that is, Fast Forward (F.FWD) or Fast Rewind (F.RWD). The deck controller 87 is arranged to report arrival of BOM or EOM back to the system controller 54.

Having described the general form of the tape storage apparatus and, at the same time, how host data records and file and save-set marks are written to, and read from, tape a description will now be given of how the storage organisation employed for save set marks facilitates searching of the tape for a particular set of data records.

As previously noted, the logical significance of the save set marks will generally only be known to the host and not the storage apparatus. One possible application of save set marks is to separate records created by one end user from another. In such an application, a save set mark may not coincide with a file mark so that the save set marks effectively constitute a second level of segmentation additional to the second level provided by the file marks; in other words, the save set marks are used in the same manner as illustrated in Figure 1(e). Although the occurrence of save set marks in the example under consideration is independent of the occurrence of file marks, the latter will generally occur much more frequently than the former.

If when reading back a tape, the host wishes to skip from the data records of one end user to the first data record of the next end user, then in the absence of save set marks, the host would, for example, ask the storage apparatus to skip to the next file mark and pass back the immediately following record to the host for examination, this record having been used as a header record identifying the records written up to the next file mark. By examining this record the host can therefore ascertain the ownership of the following records to check if they belong to the desired end user. If this is not the case, the host would then have to skip to the next file mark and proceed as before. However, the provision of save set marks greatly speeds the whole process since, in the example under consideration, it would only be necessary to skip to the next save set mark, the latter serving to indicate the start of the first data record associated with the next end user.

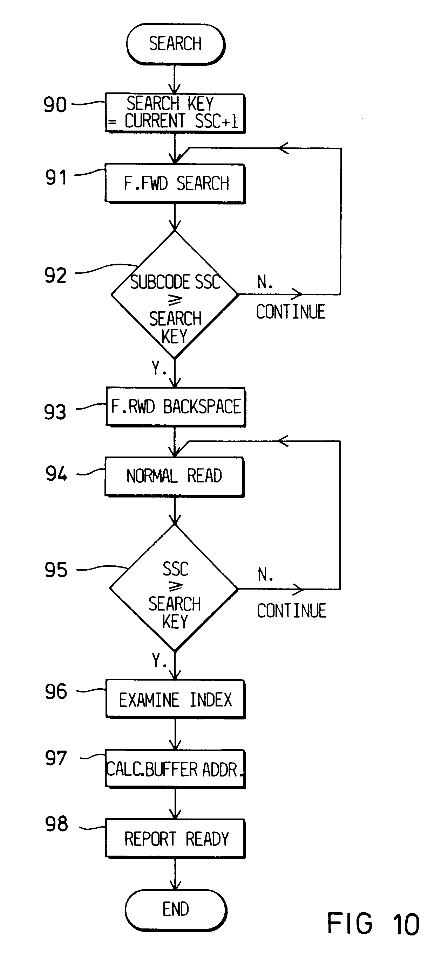

In this process, the involvement of the host is simply to request the storage apparatus to skip to the next save set mark, the way this is achieved being entirely up to the storage apparatus. A suitable algorithm for effecting such a skip is depicted in flow chart form in Figure 10. The execution of this algorithm would be under the control of the system controller 54.

Upon the host issuing a command to skip to the next save set mark, the controller 54 generates a search key having a value equal to one more than the current save set count (step 90). The current save set count is held in the grouping manager 60 of the group processor 51. Next the tape is advanced at high speed (many times faster than normal) while the head drum is rotated at a speed to maintain the relative velocity of the heads HA, HB across the tape at a constant value; in this mode, it is possible to read the sub area of about one track in every three hundred (step 91). Reading track sub areas at speed is a known technique and will therefore not be described in detail.

For each sub area that is successively read, the save set count held in the second pack of each sub data area block is compared by the controller 54 with the search key (step 92). If the save set count is less than the search key, searching is continued; however, if the save set count is equal to, or greater than, the search key, fast forward searching is terminated and the tape is backspaced through a distance substantially equal to the distance between fast forward reads (step 93). This ensures that the save set count held in the sub areas of the track now opposite the head drum will be less than the search key.

Next, the tape is advanced at its normal reading speed (step 94), and each successive group is read off tape in turn and temporarily stored in the buffer 56 of the group processor 51. The save set count held in the index of each group is compared with the search key (step 95) until the count first equals or exceeds the search key. At this point, reading is stopped as the save set mark searched for is present in the group in buffer 56 whose save set count has just been tested. The block access table of the index of this group is now examined to identify the save set mark of interest (step 96) and the address in buffer of the first-following data record byte is calculated (step 97). Thereafter, the group processor 51 tells the system controller 54 that it has found the searched-for save set mark and is ready to read the next data record; this is reported back to the host by the controller (step 98). The search operation is now terminated.

It will, of course, be appreciated that other search operations involving save set marks can also be implemented including fast backward searching and searching for a particular count value.

In order to detect when the bounds of the data area of the tape have been exceeded while searching at speed , whenever a sub area is read the Area ID sub code is checked by the system controller 54. If this sub code indicates that the searching has gone beyond the data area of the tape, then the tape direction is reversed and searching is resumed, generally at a lower speed. For clarity, this Area ID check has been omitted from Figure 10.

From the foregoing, it can be seen that the provision of save set marks can be of particular assistance in carrying out efficient searching of the tape by the apparatus, this benefit of save set marks being over and above the value these marks may have internally to the host.

## Claims

1. A data storage method for storing user data and segmentation information on tape, the method including the steps of:
- receiving a stream of user-data words organised into a plurality of records (R1 to R9) and writing the user-data words to tape (10) together with first segmentation indications (2) indicative of the division of the user-data words into records,
- receiving segmentation signals (FM) representative of a segmentation of the plurality of records (R1 to R9) into collections of records and writing second segmentation indications (1) to tape that are indicative of the segmentation represented by said signals, and
- receiving further segmentation signals (SSM) representative of a further segmentation of said records (R1 to R9) into sets of records distinct from said collections and writing third segmentation indications (6) to tape that are indicative of the further segmentation represented by said further signals,
said first, second and third segmentation indications (2,1,6) being written in such a manner as to be distinguishable from one another and said user data words; and said user data words being written to tape in blocks (3;39) independently of the record structure of the data words, each block having an associated index (4;40) containing said first, second and third segmentation indications relevant to the segmentation of data words in that block.

2. A method according to claim 1, wherein said second and third segmentation indications (1,6) can be independently written to indicate segmentation after the same record whereby said third indications (6) can be used to indicate sets independently of said second indications (1) used to indicate collections.

3. A method according to claim 1, wherein said third segmentation indications (6) can only be written to indicate segmentation between records at locations represented by said first- mentioned segmentation signals whereby each said set defined by said third segmentation indications comprises one or more said collections.

4. A method according to any one of the preceding claims, wherein said stream of user data words are written in sequence to tape and said first, second and third segmentation indications (2,1,6) are written in locations in the sequence of user data words corresponding to the segmentation they represent.

5. A method according to any one of the preceding claims, wherein a helical scan recording technique is employed to write a plurality of oblique tracks (20,21) each including a main data area (25) and a sub data area (23), said main data area (25) being used to store the blocks (39) of user data words and their associated indexes (40) that contain the segmentation indications, the method including the further steps of accumulating a count (SSC) indicative of the number of third segmentations indications written on the tape, and recording values of said count in said sub data areas (23).

6. A method according to claim 5, wherein each block (39) and its associated index (40) occupies a predetermined number of tracks, the value of said count (SSC) recorded in the sub data areas (23) of these tracks being that accumulated up to the end of the index (40) of the block (39).

7. A method of retrieving from tape data stored on the tape in accordance with a data storage method as set out in any one of the preceding claims, the method of retrieving data including the step of carrying out a search of the tape utilising said third segmentation indications.

8. A method of retrieving from tape data stored on the tape in accordance with the data storage method of claims 5 or 6, the method of retrieving data including the step of carrying out a search of the tape utilising said count values (SSC) stored in the sub data areas (23).

## Patentansprüche

1. Ein Datenspeicherungsverfahren zum Speichern von Anwenderdaten und Segmentierungsinformationen auf Band, wobei das Verfahren die folgenden Schritte einschließt:
- Empfangen eines Stromes von Anwenderdatenwörtern, die in einer Mehrzahl von Datenblöcken (R1 bis R9) organisiert sind und Schreiben der Anwenderdatenwörter auf Band (10) zusammen mit ersten Segmentierungsangaben (2), die die Einteilung der Anwenderdatenwörter in Datenblöcke angibt,
- Empfangen von Segmentierungssignalen (FM), die eine Segmentierung der Mehrzahl der Datenblöcke (R1 bis R9) in Ansammlungen von Datenblöcken darstellen, und Schreiben von zweiten Segmentierungsangaben (1) auf Band, die die Segmentierung, die durch die Signale dargestellt wird, angibt, und
- Empfangen weiterer Segmentierungssignale (SSM), die eine weitere Segmentierung der Datenblöcke (R1 bis R9) in Sätze von Datenblöcke, die von den Ansammlungen verschieden sind, darstellen, und Schreiben der dritten Segmentierungsangaben (6) auf Band, die die weitere Segmentierung, die durch die weiteren Signale dargestellt ist, angeben,
wobei die ersten, zweiten und dritten Segmentierungsangaben (2, 1, 6) derart geschrieben werden, daß sie voneinander und von den Anwenderdatenwörtern unterscheidbar sind; und wobei die Anwenderdatenwörter in Blöcken (3; 39) unabhängig von der Datenblockstruktur der Datenwörter auf Band geschrieben werden, wobei jeder Block einen zugeordneten Index (4; 40) hat, der die ersten, zweiten und dritten Segmentierungsangaben die für die Segmentierung der Datenwörter in diesem Block von Bedeutung sind, enthält.

2. Ein Verfahren nach Anspruch 1, bei dem die zweiten und dritten Segmentierungsangaben (1, 6) unabhängig geschrieben werden können, um eine Segmentierung nach dem selben Datenblock anzugeben, wodurch die dritten Angaben (6) verwendet werden können, um die Sätze unabhängig von den zweiten Angaben (1) anzugeben, die benutzt werden, um die Ansammlungen anzugeben.

3. Ein Verfahren nach Anspruch 1, bei dem die dritten Segmentierungsangaben (6) nur geschrieben werden können, um die Segmentierung zwischen Datenblöcken an Orten, die durch die erstgenannten Segmentierungssignale dargestellt werden, anzugeben, wodurch jeder durch die dritten Segmentierungsangaben definierte Satz eine oder mehrere Ansammlungen umfaßt.

4. Ein Verfahren nach einem der vorhergehenden Ansprüche bei dem der Strom der Anwenderdatenwörter sequentiell auf Band geschrieben wird und die ersten, zweiten und dritten Segmentierungsangaben (2, 1, 6) an Orte in der Sequenz der Anwenderdatenwörter geschrieben werden, die der Segmentierung entsprechen, die sie darstellen.

5. Ein Verfahren nach einem der vorhergehenden Ansprüche bei dem eine Aufzeichnungstechnik mit schraubenlinienförmigen Spurverlauf verwendet wird, um eine Mehrzahl schräger Spuren (20, 21), von denen jede ein Hauptdatengebiet (25) und ein untergeordnetes Datengebiet (23) einschließt, wobei das Hauptdatengebiet (25) verwendet wird, um die Blöcke (39) der Anwenderdatenwörter und ihrer zugeordneten Indizes (40), die die Segmentierungsangaben enthalten, zu speichern, wobei das Verfahren ferner die Schritte des Akkumulierens eines Zählstandes (SSC), der die Anzahl der dritten Segmentierungsangaben, die auf das Band geschrieben sind, angibt, und des Werteaufzeichnens des Zählstandes in den untergeordneten Datengebieten (23) einschließt.

6. Ein Verfahren nach Anspruch 5, bei dem jeder Block (39) und seine zugeordneten Indizes (40) eine vorbestimmte Anzahl von Spuren belegt, wobei der Wert des Zählstandes (SSC), der in den untergeordneten Datengebieten (23) dieser Spuren aufgezeichnet wird, derjenige ist, der bis zu dem Ende des Indizes (40) des Blocks (39) akkumuliert wird.

7. Ein Verfahren zum Auslesen aus dem Band von auf dem Band gespeicherten Daten gemäß einem Datenspeicherungsverfahren nach einem der vorhergehenden Ansprüche, wobei das Verfahren zum Auslesen von Daten den Schritt des Ausführens einer Suche auf dem Band unter Verwendung der dritten Segmentierungsangaben einschließt.

8. Ein Verfahren zum Auslesen aus dem Band von auf dem Band gespeicherten Daten gemäß dem Datenspeicherungsverfahren nach Anspruch 5 oder 6, wobei das Verfahren zum Auslesen von Daten den Schritt des Ausführens einer Suche auf dem Band unter Verwendung des Zählstandes (SSC), die in den untergeordneten Datengebieten (23) gespeichert sind, einschließt.

## Revendications

1. Procédé de mémorisation de données d'utilisateur pour mémoriser des données et des informations de segmentation sur bande, comprenant les étapes consistant à :
- recevoir un train de mots de données d'utilisateur organisés sous forme de plusieurs enregistrements (R₁ à R₉) et écrire les mots de données d'utilisateur sur une bande (10) en même temps que des premières indications de segmentation (2) indiquant la division des mots de données d'utilisateur en enregistrement,
- recevoir des signaux de segmentation (FM) représentant une segmentation de plusieurs enregistrements (R₁ à R₉) sous forme d'ensembles d'enregistrements et écrire sur la bande des secondes indications de segmentation (1) qui indiquent la segmentation représentée par lesdits signaux, et
- recevoir d'autres signaux de segmentation (SSM) représentant une autre segmentation desdits enregistrements (R₁ à R₉) sous la forme de groupes d'enregistrements distincts desdits ensembles et écrire sur la bande des troisièmes indications de segmentation (6) qui indiquent l'autre segmentation représentée par lesdits autres signaux,
- lesdites premières, secondes et troisièmes indications (2,1,6) étant écrites de manière à pouvoir être distinguées l'une de l'autre et desdits mots de données d'utilisateur ; et lesdits mots de données d'utilisateur étant écrits sur bande sous forme de blocs (3 ; 39) indépendamment de la structure d'enregistrement des mots de données, chaque bloc comportant un index associé (4 ; 40) contenant lesdites premières, secondes et troisièmes indications de segmentation se rapportant à la segmentation des mots de données dans ce bloc.

2. Procédé selon la revendication 1, dans lequel lesdites secondes et troisièmes indications de segmentation (1,6) peuvent être écrites indépendamment pour indiquer une segmentation après le même enregistrement de sorte que lesdites troisièmes indications (6) puissent être utilisées pour indiquer des groupes indépendamment desdites secondes indications (1) utilisées pour indiquer des ensembles.

3. Procédé selon la revendication 1, dans lequel lesdites troisièmes indications de segmentation (6) peuvent seulement être écrites pour indiquer une segmentation entre des enregistrements situés dans des positions représentées par lesdits signaux de segmentation mentionnés en premier de manière que chacun desdits groupes définis par lesdites troisièmes indications de segmentation comprenne un ou plusieurs ensembles.

4. Procédé selon l'une quelconque des revendications précédentes, dans lequel ledit train de mots de données d'utilisateur est écrit séquentiellement sur bande et lesdites premières, secondes et troisièmes indications de segmentation (2,1,6) sont écrites dans des positions situées dans la séquence de mots de données d'utilisateur en correspondance à la segmentation qu'elles représentent.

5. Procédé selon l'une quelconque des revendications précédentes, dans lequel une technique d'enregistrement avec balayage hélicoïdal est utilisée pour écrire plusieurs pistes obliques (20,21) comprenant chacune une zone principale de données (25) et une zone secondaire de données (23), ladite zone principale de données (25) étant utilisée pour mémoriser les blocs (39) de mots de données d'utilisateur et leurs index associés (40) qui contiennent les indications de segmentation, le procédé comprenant les autres étapes d'accumulation d'un compte (SSC) indiquant le nombre de troisièmes indications de segmentation écrites sur la bande, et d'enregistrement de valeurs dudit compte dans lesdites zones secondaires de données.

6. Procédé selon la revendication 5, dans lequel chaque bloc (39) et son index associé (40) occupent un nombre prédéterminé de pistes, la valeur dudit compte (SSC) enregistré dans les zones secondaires de données (23) de ces pistes étant celle accumulée jusqu'à la fin de l'index (40) du bloc (39).

7. Procédé pour extraire d'une bande de données enregistrées sur la bande conformément à un procédé de mémorisation de données tel que défini dans une quelconque des revendications précédentes, le procédé d'extraction de données comprenant l'étape consistant à effectuer dans la bande une recherche en utilisant lesdites troisièmes indications de segmentation.

8. Procédé pour extraire d'une bande de données enregistrées sur la bande conformément au procédé de mémorisation de données des revendications 5 ou 6, le procédé d'extraction de données comprenant l'étape consistant à effectuer dans la bande une recherche en utilisant lesdites valeurs de compte (SSC) mémorisées dans lesdites zones secondaires de données (23).
